# EUROPÄISCHE PATENTANMELDUNG

(11) **EP 4 685 011 A1**
(43) Veröffentlichungstag der Anmeldung: **28.01.2026**
(21) Anmeldenummer: 25178475.7
(22) Anmeldetag: 23.05.2025
(51) Int. Cl.: B60R 1/07, B60R 1/26, B60R 1/28, B60R 1/00

(54) **INDIREKTES SICHTSYSTEM SOWIE FAHRZEUG MIT SICHTSYSTEM**

(30) Priorität: 22.07.2024 DE 102024120759
(71) Anmelder: MEKRA LANG GmbH & Co. KG, 91465 Ergersheim (DE)
(72) Erfinder: Lang, Susanne, 91465 Ergersheim (DE); Finkenberger, Elmar, 91587 Adelshofen (DE); Endres, Florian, 91593 Burgbernheim OT Schwebheim (DE); Heckel, Michael, 91746 Weidenbach (DE)
(74) Vertreter: Winter, Brandl - Partnerschaft mbB

(57) **Zusammenfassung**

Die Offenbarung betrifft ein Indirektes Sichtsystem (1) für ein Fahrzeug (2), das ein Zugfahrzeug (3) und ein Anbaugerät (4) aufweist, mit einem Sichtelement (5), einer Tragstruktur (6), wobei die Tragstruktur (6) eine Fahrzeuganbindung (7) des Sichtsystems (1) ausbildet und das Sichtelement (5) über die Tragstruktur (6) mit der Fahrzeuganbindung (7) verbunden ist, einer Verstelleinheit (8), wobei die Verstelleinheit (8) ein Sichtelement-Verstellelement (9) zum Verstellen des Sichtelements (5) und/oder ein Tragstruktur-Verstellelement (10) zum Verstellen der Tragstruktur (6) aufweist, wobei das Sichtsystem (1) eingerichtet ist, die Verstelleinheit (8) in Abhängigkeit von geometrischen Abmessungen (15) und/oder eines Zustands (16) und/oder einer globalen Position (17) des Anbaugeräts (4) automatisch zu verstellen. Zudem betrifft die Offenbarung ein Fahrzeug (2) mit dem Sichtsystem (1).

## Beschreibung

Die vorliegende Offenbarung betrifft ein indirektes Sichtsystem für ein Fahrzeug, das ein Zugfahrzeug und ein Anbaugerät aufweist, insbesondere für ein Nutzfahrzeug, vorzugsweise für ein Agrarfahrzeug oder eine Baumaschine oder für einen Lastkraftwagen. Zudem betrifft die vorliegende Offenbarung ein Fahrzeug, das ein Zugfahrzeug und ein Anbaugerät aufweist, insbesondere Nutzfahrzeug, vorzugsweise Agrarfahrzeug oder Baumaschine oder Lastkraftwagen, mit einem solchen Sichtsystem.

Aus dem Stand der Technik sind bereits indirekte Sichtsysteme für Fahrzeuge bekannt, mittels denen ein Fahrer des Fahrzeugs einen Interessenbereich einsehen kann. Solche Sichtsysteme weisen üblicherweise ein Sichtelement und eine Tragstruktur zur Anbringung des Sichtelements an dem Fahrzeug auf. Um unterschiedliche Interessenbereiche einsehen zu können, weisen bekannte Sichtsysteme eine Verstelleinheit auf. Diese dienen insbesondere dazu, um eine Position/Lage/Ausrichtung des Sichtelements durch Veränderung des Sichtelements selbst und/oder durch Veränderung der Tragstruktur bezogen auf das Fahrzeug bedarfsgerecht einzustellen.

Insbesondere bei der Anwendung in einem Fahrzeugbereich, in dem das Fahrzeug ein Zugfahrzeug sowie ein Anbaugerät aufweist, treten unterschiedliche Situationen auf, für die eine teils erhebliche Verstellung des Sichtelements und/oder der Tragstruktur erforderlich sind. Diese Situationen sind insbesondere dadurch bedingt, dass das Anbaugerät, als solches gesehen, große sowie in Abhängigkeit seiner Anwendung stark variierende geometrische Abmessungen aufweist. Insbesondere bei einem mehrteiligen Aufbau der Verstelleinheit, bei dem zur Einsehbarkeit besonders breiter oder langer Fahrzeuge sowohl die Tragstruktur als auch das Sichtelement verstellbar sind, kann die erforderliche Verstellung der Verstelleinheit komplex und zeitaufwändig sein, was wiederum ein Sicherheitsrisiko beim Betrieb des Fahrzeugs darstellen kann.

Um den Fahrer bei der Verstellung von indirekten Sichtsystemen zu unterstützen, sind generell bereits automatische Verstelleinheiten bekannt:
Beispielsweise ist das sogenanntes Panning (Schwenken) in Kamerasystemen aus der EP 3 168 083 B1, EP 3 501 897 B1 und EP 3 882 080 A1 bekannt, bei der eine Drehbewegung von Fahrzeugrädern sensorisch erfasst wird und basierend darauf ein für einen Fahrer angezeigter Bildausschnitt so gewählt wird, dass ein bestimmter Teil des Fahrzeugs zu jedem Zeitpunkt innerhalb des Bildausschnitt dargestellt wird.

Auch ist aus dem Fahrzeugbereich das automatische Verstellen von Sichtsystemen in der Weise bekannt, dass das Sichtsystem beim Rückwärtsfahren beispielsweise durch Abklappen von Seitenspiegeln so verstellt wird, dass ein Boden- und Bordsteinbereich für den Fahrer einsehbar ist, oder dass das Sichtsystem beim Rückwärtsfahren eine Rangieransicht für den Fahrer anzeigt.

Jedoch sind automatische Verstelleinheiten gerade für bestimmte Einsatzgebiete, in denen eine aufwändige Verstellung erforderlich ist, insbesondere für die oben beschriebene Anwendung, nämlich im Bereich von Fahrzeugen mit Zugfahrzeug, und Anbaugerät, noch nicht bekannt.

Es ist also die Aufgabe der vorliegenden Offenbarung, die Nachteile aus dem Stand der Technik zu vermeiden oder wenigstens zu verringern. Insbesondere soll ein indirektes Sichtsystem bereitgestellt werden, das eine optimale Sicht für den Fahrer möglichst zu jedem Zeitpunkt gewährleistet, ohne dabei den Fahrer von der Steuerung des Fahrzeugs abzulenken und damit eine sichere Bedienung des Fahrzeugs sowie eine Erhöhung der Sicherheit aller Verkehrsteilnehmer bereitzustellen.

Die der vorliegenden Offenbarung zugrundeliegende Aufgabe wird durch ein indirektes Sichtsystem mit den Merkmalen des Patentanspruchs 1 sowie durch ein Fahrzeug mit den Merkmalen des nebengeordneten Patentanspruchs gelöst.

Demnach wird die Aufgabe der vorliegenden Offenbarung durch ein indirektes Sichtsystem für ein Fahrzeug, insbesondere für ein Nutzfahrzeug, vorzugsweise für ein Agrarfahrzeug oder eine Baumaschine oder für einen Lastkraftwagen, gelöst. Das Fahrzeug weist ein Zugfahrzeug und ein (durch das Zugfahrzeug gezogenes) Anbaugerät auf. Unter dem Anbaugerät sind insbesondere gezogene, d.h. insbesondere nicht selbstständig antreibbare, und abkoppelbare/auswechselbare Geräte, wie beispielsweise auch Anhänger, zu verstehen. Ein Anbaugerät kann beispielsweise ein Arbeitsgerät, wie ein Pflug, Düngerstreuer, Kreiselegge, Spritze, etc. sein. Dabei kann das Anbaugerät bzw. Arbeitsgerät auch an/in dem Zugfahrzeug integriert sein bzw. nicht abkoppelbar mit dem Zugfahrzeug verbunden sein. Das heißt, dass das Fahrzeug auch eine Kombination aus Zugfahrzeug und Anbaugerät, also eine selbstfahrende Arbeitsmaschine sein kann. Eine selbstfahrende Arbeitsmaschine kann beispielsweise ein (Rüben-)Vollernter, Feldhäckslers, etc. sein.

Das Sichtsystem weist ein Sichtelement auf. Das Sichtelement kann insbesondere ein Spiegelglas oder eine optische Sensoreinheit sein.

Das Sichtsystem weist eine Tragstruktur auf. Die Tragstruktur bildet eine Fahrzeuganbindung des Sichtsystems aus. Das Sichtelement ist über die Tragstruktur mit der Fahrzeuganbindung verbunden. Das Sichtelement kann direkt oder indirekt mit der Tragstruktur verbunden sein. Beispielsweise kann das Sichtelement an einem Ende der Tragstruktur befestigt sein und die Fahrzeuganbindung an einem anderen Ende der Tragstruktur ausgebildet sein. Beispielsweise kann das Sichtsystem auch mindestens eine Fahrzeuganbindung und mindestens eine Anbindung des Sichtelements aufweisen.

Das Sichtsystem weist eine Verstelleinheit auf. Die Verstelleinheit weist ein Tragstruktur-Verstellelement zum Verstellen der Tragstruktur und/oder ein Sichtelement-Verstellelement zum Verstellen des Sichtelements auf. Das Tragstruktur-Verstellelement dient insbesondere zu einem physischen Verstellen der Tragstruktur. Das Sichtelement-Verstellelement dient insbesondere zu einem physischen und/oder digitalen Verstellen des Sichtelements. Das physische Verstellen wird insbesondere als Gegensatz zu dem digitalen Verstellen verstanden. Unter dem physischen Verstellen kann vorzugsweise ein mechanisches, elektromechanisches und/oder elektrisches Bewegen verstanden werden. Unter dem digitalen Verstellen kann vorzugsweise ein Ändern eines Auslesebereichs auf einem Bildsensor und/oder ein (nachträgliches) Verschieben eines angezeigten (von dem Auslesebereich ausgeschnittenen) Teilbereichs verstanden werden. Das Sichtelement kann insbesondere über das Sichtelement-Verstellelement mit der Tragstruktur verbunden sein. Dabei dient das Verstellen der Verstelleinheit zur Positionierung des Sichtelements bezüglich der Fahrzeuganbindung und damit bezüglich eines Interessenbereichs bzw. Sichtfelds, insbesondere Fahrersichtfelds.

Gemäß der vorliegenden Offenbarung ist das Sichtsystem eingerichtet, die Verstelleinheit in Abhängigkeit von geometrischen Abmessungen und/oder eines Zustands und/oder einer globalen, insbesondere satellitengestützt bestimmten Position des Anbaugeräts automatisch zu verstellen. Die globale Position kann insbesondere eine GPS-Position sein. Die globale Position kann aber auch durch andere satellitengestützte (Lokalisierungs-)Systeme, wie Galileo, Glonass oder Beidou, bestimmt bzw. festgelegt sein.

Unter den geometrischen (Außen-)Abmessungen des Anbaugeräts werden insbesondere eine Länge und/oder eine Breite und/oder eine Achsenanzahl des Anbaugeräts verstanden. Die geometrischen Abmessungen können dabei auch über einen Anbaugerätetyp hinterlegt sein.

Unter dem Zustand des Anbaugeräts wird insbesondere eine Betriebsweise des Anbaugeräts verstanden, welche sich direkt auf die geometrischen (Außen-)Abmessungen des Anbaugeräts auswirkt. Das heißt, dass das Anbaugerät in einem ersten Zustand eine größere Breite bzw. Länge als in einem zweiten Zustand hat. Beispielsweise kann das Anbaugerät eine Vorrichtung wie eine Streuvorrichtung oder eine Pflugvorrichtung aufweisen, die in dem ersten Zustand angekoppelt/ ausgefahren/ ausgeklappt/ ausgeschwenkt/ abgesenkt und in dem zweiten Zustand abgekoppelt/ eingefahren/ eingeklappt/ eingeschwenkt/ angehoben ist. Unter dem Zustand kann auch eine Information verstanden werden, dass kein Anbaugerät an dem Zugfahrzeug angebracht ist. Unter dem Zustand des Anbaugeräts wird auch insbesondere eine Betriebsweise des Anbaugeräts verstanden, welche sich direkt auf eine Position eines einzusehenden Interessenbereichs des Anbaugeräts auswirkt. Das heißt, dass in einem ersten Zustand ein anderer Bereich des Anbaugeräts zur Fahrzeugsteuerung einsehbar sein sollte als in einem zweiten Zustand des Anbaugeräts. Beispielsweise kann beim Wenden des Fahrzeugs auf dem Feld ein anderer Bereich des Anbaugeräts von Bedeutung sein als beim Arbeitsbetrieb des Fahrzeugs.

Unter der globalen Position bzw. GPS-Position des Anbaugeräts wird insbesondere eine Information darüber verstanden, ob sich das Anbaugerät auf öffentlichen Straßen, Wegen und Plätzen, d h. im Straßenverkehr, befindet und das Sichtsystem somit besonderen gesetzlichen Anforderungen bezüglich eines für das Sichtsystem fest vorgeschriebenen Sichtfelds genügen muss oder ob sich das Anbaugerät auf privatem Grund, d.h. insbesondere auf einem Feld, befindet und das Sichtfeld freier eingestellt werden darf. Die globale Position kann insbesondere durch das Fahrzeug empfangen werden und über eine Kommunikationsschnittstelle des Sichtsystems zur Verfügung gestellt werden.

Unter einer automatischen Verstellung wird insbesondere eine Verstellung ohne aktive Interaktion bzw. ohne manuelles Auslösen der Verstellung durch einen Fahrer verstanden. Das heißt, dass auch kein manuelles Aktuieren (etwa durch Drücken eines Knopfs) erfolgen muss, um eine (etwa auf eine vorgespeicherte Position) eigenständig erfolgende Verstellung auszulösen. Mit anderen Worten ist das manuelle Auslösen nicht mit einer manuellen Verstellung gleichzusetzen. Das heißt, dass die offenbarungsgemäße Verstellung durch ein durch das Anbaugerät betreffendes Fahrzeugsignal bzw. Steuersignal ausgelöst bzw. getriggert wird.

Mit anderen Worten ist das Sichtsystem ausgebildet, um die Verstellung/Einstellung der Verstelleinheit abmessungsbedingt und/oder situationsbedingt und/oder positionsbedingt bezogen auf das Anbaugerät automatisch auszulösen und auszuführen. Dabei erfolgt das Verstellen zur Anpassung an die Abmessungen bzw. auf die situationsbedingt veränderten Abmessungen und/oder den positionsbedingt veränderten Interessenbereich. Dies hat den Vorteil, dass durch die automatisierte Sichtsystemeinstellung die Sicherheit beim Einsatz des Anbaugeräts erhöht und der Fahrer des Fahrzeugs erheblich entlastet werden kann. Insbesondere kann der Fahrer zeitlich entlastet werden, so dass er sich nicht die Zeit nehmen muss, um das Sichtsystem in der jeweiligen Situation neu zu verstellen. Somit wird das Sicherheitsrisiko reduziert, dass insbesondere dann entstehen kann, wenn der Fahrer sich nicht ausreichend Zeit zur Sichtsystemverstellung nehmen, sondern die Verstellung unter Zeitdruck nicht in der benötigten Sorgfältigkeit ausführen würde.

Gemäß einer bevorzugten Ausführungsform kann das Sichtsystem eingerichtet sein, die Verstelleinheit in einem Schritt aus einer aktuellen Position in eine vordefinierte Position zu verstellen. Mit anderen Worten ist das Sichtsystem eingerichtet, die Verstelleinheit als einmaliges Ereignis bzw. ohne Zwischenpositionen bzw. nicht über einen längeren Zeitraum. Das heißt, dass unter dem automatischen Verstellen insbesondere kein kontinuierliches Nachführen eines Sichtfelds, wie beispielsweise beim sogenannten (etwa aus der DE 10 2017 130 566 B4 bekannten) Trailer-Panning bzw. bei der Anhängernachführung, zu verstehen ist. Dabei kann die Verstellung als solche (in Abhängigkeit der Ausbildung bzw. Bauform der Verstelleinheit) kontinuierlich oder schrittweise erfolgen.

Gemäß einer bevorzugten Ausführungsform kann das Sichtsystem eingerichtet sein, die Verstelleinheit (nur) bei Anhängevorgängen, d.h. das Anbaugerät betreffende Fahrsituationen zu verstellen. Das heißt, dass unter dem automatischen Verstellen insbesondere kein Verstellen zur (rein) streckenführungsbedingten Anpassung, wie beispielsweise bei einer Kurvenfahrt oder beim Rückwärts-Einparken, zu verstehen ist. Unter der das Anbaugerät betreffenden Anpassung kann auch ein Wechsel der Fahrsituation, wie beispielsweise der Wechsel vom (gesetzlich geregelten) Straßenverkehr zum Privatgelände ohne öffentlichen Verkehr, insbesondere zum Feldbetrieb, verstanden werden, mit dem eine Änderung des Anbaugerätes einhergeht und somit ein Sichtfeld für den Fahrer angepasst werden muss, um dem Fahrer die gewünschte Sicht zu gewähren. Alternativ kann auch ohne Änderung des Anbaugerätes ein anderer Sichtbereich im beispielsweise Feldbetrieb für den Fahrer sinnvoll sein.

Gemäß einer bevorzugten Ausführungsform kann das Sichtsystem eine Speichereinheit zum Speichern von vordefinierten Positionen (bzw. Verstellpositionen) der Verstelleinheit aufweisen. Das heißt, dass in der Speichereinheit (unterschiedliche) vordefinierte Positionen abgelegt/abgespeichert sind. Dabei wird unter einer vordefinierten Position insbesondere eine Soll-Position der Verstelleinheit, d.h. des Tragstruktur-Verstellelements und/oder des Sichtelement-Verstellelements, verstanden. Dies hat den Vorteil, dass mittels der Speichereinheit auf eine bestimmte/gewünschte Position aus den vordefinierten Positionen der Verstelleinheit zugegriffen werden kann, so dass (insbesondere für das betreffende Anbaugerät) unzweckmäßige Positionen der Verstelleinheit einfacher vermieden werden können.

Vorzugsweise kann die Speichereinheit physikalisch/örtlich direkt in dem Sichtsystem integriert sein und/oder durch physikalisch/örtlich extern angeordneten Speicher, wie einen Fahrzeugspeicher oder eine Speichercloud, gebildet sein, auf dessen Speicherplätze das Sichtsystem zugreifen kann. Das heißt, dass die Speichereinheit fahrzeuggebunden und/oder fahrzeugübergreifend bzw. fahrzeugunabhängig, insbesondere cloudbasiert, ausgebildet sein kann. Unter fahrzeugübergreifend wird verstanden, dass für einen Fahrzeugtyp, d.h. für einen Typ des Zugfahrzeugs und/oder des Anbaugeräts, die Daten bzw. Speicherplätze auch für ein anderes Fahrzeug, d.h. Zugfahrzeug und/oder Anbaugerät, gleichen Typs verwendet werden können.

Gemäß einer bevorzugten Ausführungsform kann das Sichtsystem eine Kommunikationsschnittstelle zum Senden und/oder zum Empfangen von Fahrzeugsignalen, welche insbesondere Informationen über die geometrischen Abmessungen und/oder den Zustand und/oder die GPS-Position des Anbaugeräts enthalten, aufweisen. Die Kommunikationsschnittstelle kann als eine Datenschnittstelle, insbesondere als eine Busschnittstelle, wie eine CAN-Bus-Schnittstelle und/oder eine ISOBUS-Schnittstelle, und/oder als eine Netzwerkschnittstelle, wie eine LIN-Schnittstelle und/oder eine Ethernet-Schnittstelle, und/oder als eine GPS-Schnittstelle ausgebildet sein. Das Fahrzeugsignal kann von dem Fahrzeug, d.h. dem Zugfahrzeug und/oder dem Anbaugerät, ausgesandt werden.

Gemäß einer bevorzugten Ausführungsform können die Fahrzeugsignale (bzw. einige der Fahrzeugsignale) jeweils einer vordefinierten Position (aus den vordefinierten Positionen) der Verstelleinheit zugeordnet sein. Das heißt, dass die Fahrzeugsignale einer der abgespeicherten, vordefinierten Position entsprechen bzw. den Fahrzeugsignalen eine eindeutige Position der Verstelleinheit zugeordnet ist. Dabei kann eine bzw. die gleiche vordefinierte Position auch mehreren Fahrzeugsignalen zugeordnet sein, aber einem bzw. dem gleichen Fahrzeugsignal können nicht mehrere vordefinierte Position zugeordnet sein.

Zudem kann die Kommunikationsschnittstelle eingerichtet sein, die empfangenen Fahrzeugsignale einem Speicherort der zugehörigen Verstellposition zuzuordnen und/oder beim Empfangen von Fahrzeugsignale die abgespeicherte Verstellposition anzuweisen. Das heißt, dass die Kommunikationsschnittstelle eine Verarbeitungseinheit ausbildet bzw. eine gewissen Verarbeitungslogik realisiert. Somit ist die Kommunikationsschnittstelle eingerichtet, die Verstellung zur Ausführung zu bringen und die Verwaltung der Speicherorte, durch den Fahrer vorgenommenen Einstellungen etc. zu verarbeiten.

Gemäß einer bevorzugten Ausführungsform kann das Sichtsystem eingerichtet sein, die Verstelleinheit in Abhängigkeit des Fahrzeugsignals auf die dem Fahrzeugsignal zugeordnete, vordefinierte Position der Verstelleinheit zu verstellen. Mit anderen Worten löst das Fahrzeugsignal (automatisch) aus, dass die Verstelleinheit die entsprechende Soll-Position einnimmt bzw. in die entsprechende Soll-Position verstellt wird. Das heißt, dass die Verstelleinheit beim Empfangen des Fahrzeugsignals, je nachdem, in welcher Ist-Position sich die Verstelleinheit befindet, eine entsprechende Positionsänderung ausführt oder in der (bereits mit der Soll-Position übereinstimmenden) Ist-Position verbleibt. Das heißt, dass die automatische Verstellung insbesondere nur dann stattfindet, wenn die aktuelle Position bzw. Ist-Position der Verstelleinheit nicht der vordefinierten Position bzw. Soll-Position entspricht. Dies ist insbesondere dann von Bedeutung, wenn die Fahrzeugsignale kontinuierlich mit einer gewissen Periodizität bzw. nicht als einmaliges Ereignis empfangen werden. Jedoch kann ein Fahrer eine automatische Positionsverstellung überschreiben. Das heißt, dass eine Fahrereinstellung bzw. nachjustierte Werte Vorrang bzw. Priorität haben.

Gemäß einer bevorzugten Ausführungsform kann das Fahrzeugsignal Informationen zur Fahreridentifikation des Fahrzeugs enthalten. Dabei kann die Fahreridentifikation beispielsweise über einen verwendeten Fahrzeugschlüssel, eine eingestellte Sitzposition, ein ausgewähltes Fahrerprofil, ein gemessenes Fahrergewicht oder über ein sogenanntes Drive-Monitoring erfolgen. Gemäß der bevorzugten Ausführungsform können die vordefinierten Positionen der Verstelleinheit in Abhängigkeit der Fahreridentifikation bzw. eines Fahrerprofils in der Speichereinheit gespeichert sein. Das heißt, dass die Verstelleinheit je nachdem, welcher Fahrer das Fahrzeug steuert, unterschiedliche vordefinierte Positionen (automatisch) einnehmen kann. Dies hat den Vorteil, dass durch die personalisierte Verstellung das Sichtsystem optimal auf den individuellen Fahrer angepasst wird.

Gemäß einer bevorzugten Ausführungsform kann das Fahrzeugsignal Informationen zu einem Fahrzeugtyp, insbesondere von geometrischen Abmessungen des Fahrzeugtyps, und/oder zu einem Anbaugerätetyp, insbesondere von geometrischen Abmessungen des Anbaugerätetyps, enthalten. Gemäß der bevorzugten Ausführungsform können die vordefinierten Positionen der Verstelleinheit in Abhängigkeit des Fahrzeugtyps und/oder des Anbaugerätetyps in der Speichereinheit gespeichert sein. Das heißt, dass die Verstelleinheit je nachdem, welches Fahrzeug bzw. Anbaugerät gesteuert wird, unterschiedliche vordefinierte Positionen (automatisch) einnehmen kann. Dies hat den Vorteil, dass geometrische Abmessungen des Fahrzeugs bzw. Anbaugeräts ausreichend berücksichtigt werden können. Insbesondere, wenn die Speichereinheit fahrzeugübergreifend ausgebildet ist, ist die Speichereinheit vorzugsweise eingerichtet, um die vordefinierten Positionen der Verstelleinheit in Abhängigkeit des Fahrzeugtyps bzw. Anbaugerätetyps zu speichern.

Gemäß einer bevorzugten Ausführungsform können die vordefinierten Positionen manuell, insbesondere über ein Human-Machine-Interface, einstellbar und/oder nachjustierbar bzw. korrigierbar sein. Das Human-Machine-Interface kann insbesondere in Form eines Door-Control Panels, in Form eines Dashboard-Monitors bzw. Touchdisplays und/oder in Form von Knöpfen am Lenkrad ausgebildet sein. Das heißt, dass eine Neueinstellung bzw. erstmalige Einstellung einer vordefinierten Position und/oder eine Korrektur einer (bereits eingestellten) vordefinierten Position manuell ausgeführt werden kann. Dabei kann das Human-Machine-Interface direkt mit der Kommunikationsschnittstelle eine Einheit bilden. Alternativ können die Eingabewerte über das Kommunikationsnetzwerk des Fahrzeugs gesendet und von der Kommunikationsschnittstelle empfangen und/oder verarbeitet werden.

Gemäß der bevorzugten Ausführungsform kann eine manuell eingestellte Position als eine vordefinierte Position in der Speichereinheit abspeicherbar sein. Das heißt, dass das Sichtsystem eingerichtet ist, eine aktuelle (manuell zuvor neueingestellte) Position der Verstelleinheit als eine (zusätzliche) vordefinierte Position in der Speichereinheit abzuspeichern. So können weitere zweckmäßige vordefinierte Positionen hinterlegt werden.

Gemäß der bevorzugten Ausführungsform kann eine manuell nachjustierte Position einer vordefinierten Position (aus den vordefinierten Positionen) als eine korrigierte vordefinierte Position in der Speichereinheit abspeicherbar sein. Das heißt, dass das Sichtsystem eingerichtet ist, eine aktuelle (manuell zuvor korrigierte/nachjustierte) Position der Verstelleinheit als die vordefinierte Position in der Speichereinheit abzuspeichern bzw. die ursprünglich vordefinierte Position zu ersetzen. Alternativ kann das Sichtsystem eingerichtet sein, eine aktuelle (manuell zuvor korrigierte/nachjustierte) Position der Verstelleinheit (nur) temporär zu verwenden und anschließend zu verwerfen bzw. die ursprünglich vordefinierte Position beizubehalten. So kann das Sichtsystem besonders individuell angepasst und auf die Bedürfnisse der einzelnen Fahrer abgestimmt werden.

Gemäß einer bevorzugten Ausführungsform kann das Tragstruktur-Verstellelement eine mechanische und/oder mechatronische Komponente aufweisen, die zum Ausführen einer linearen Translationsbewegung und/oder einer Schwenkbewegung ausgebildet ist. Insbesondere kann das Tragstruktur-Verstellelement zum Vergrößern und/oder Verkleinern eines Abstands und/oder zum Einstellen eines Winkels des Sichtelements zu der Fahrzeuganbindung und damit zu einem Innenraum des Fahrzeugs dienen. Gemäß einer bevorzugten Ausführungsform kann die mechanische und/oder mechatronische Komponente eine Teleskopstange sein. So kann auf einfache Weise eine geeignete Verstellung der Tragstruktur ermöglicht werden.

Gemäß einer bevorzugten Ausführungsform kann das Sichtelement-Verstellelement eine mechanische und/oder mechatronische Komponente aufweisen, die zum Ausführen einer Verstellbewegung, insbesondere Drehbewegung bzw. Kippbewegung, in drei Raumrichtungen ausgebildet ist. Gemäß einer bevorzugten Ausführungsform kann die mechanische und/oder mechatronische Komponente ein Getriebe sein.

Gemäß einer bevorzugten Ausführungsform kann das Sichtelement-Verstellelement eine digitale Komponente aufweisen, die zur Änderung einer Skalierung und/oder zur Änderung einer Größe und/oder zur Änderung bzw. zur Verschiebung eines Ausschnitts eines (für den Fahrer) angezeigten Bildbereichs ausgebildet ist. Dabei kann der angezeigte Bildbereich ein Teil eines gesamten Erfassungsbereichs bzw. Auslesebereichs oder der gesamte Erfassungsbereich sein.

Gemäß einer bevorzugten Ausführungsform kann das Sichtsystem vorzugsweise ausgebildet sein, um eine durch die digitale Komponente erfolgte Verstellung als ein Overlay (bzw. in einer überlagerten Darstellung mit dem angezeigten Sichtfeld) für den Fahrer anzuzeigen. Dabei kann das Overlay anbaugerätespezifisch ausgebildet sein. Das heißt, dass in dem Overlay Piktogramme und/oder Distanzlinien und/oder eine Lage eines Anbaugerät-Endes und/oder eine Manövrierhilfe, wie ein Fahrzeugumriss, eingeblendet werden können. Insbesondere bei einer digitalen Verstellung wird der Fahrer somit dabei unterstützt, sich in dem verstellten Sichtfeld neu zu orientieren bzw. auf die verstellte Position der Verstelleinheit umzustellen.

Gemäß einer bevorzugten Ausführungsform kann das Sichtsystem ein Spiegelsystem oder ein Kamera-Monitor-System, insbesondere ein Spiegelersatzsystem nach UN/ECE R46 sein. Dabei kann das Spiegelsystem ein Spiegelglas als Sichtelement aufweisen. Dabei kann das Kamera-Monitor-System eine optische Sensoreinheit als Sichtelement und eine Anzeigeeinheit aufweisen.

Gemäß einer bevorzugten Ausführungsform kann das Sichtsystem eine Heizfunktion zum Entfernen von Eis und/oder Wasser auf dem Sichtelement oder einer das Sichtelement abdeckenden Abdeckung aufweisen. Gemäß der bevorzugten Ausführungsform kann das Sichtsystem eingerichtet sein, die Heizfunktion in Abhängigkeit der Fahrzeugsignale zu steuern.

Weiter wird die Aufgabe der vorliegenden Offenbarung durch ein Fahrzeug, das ein Zugfahrzeug und ein Anbaugerät aufweist, insbesondere Nutzfahrzeug, vorzugsweise Agrarfahrzeug oder Baumaschine oder Lastkraftwagen, mit dem beschriebenen Sichtsystem gelöst.

Gemäß einer bevorzugten Ausführungsform kann das Fahrzeug ein Leuchtmittel zum Ausleuchten eines Bereichs um das Fahrzeug aufweisen. Gemäß der bevorzugten Ausführungsform kann das Fahrzeug einrichtet sein, das Leuchtmittel in Abhängigkeit der Fahrzeugsignale zu steuern.

Mit anderen Worten betrifft die vorliegende Offenbarung die Problemstellung, dass im Agrar- und Baumaschinenbereich an Zugfahrzeug angehängte Maschinen zu einer starken Verbreiterung des Gespanns führen, weshalb Sichtsysteme für Fahrzeuge im Agrar- und Baumaschinenbereich eine Verstelleinheit, beispielsweise in Form einer Teleskopstange, aufweisen, die über die aus dem Personenkraftwagenbereich bekannten Sichtsystemverstelleinheiten hinausgehen und die gesamte Sichtsystemeinheit bezüglich ihrer Lage zum Fahrzeug verändern und diese je nach Bedarf weiter nach außen bzw. innen stellen können. Zusätzlich zur Verstellung der Sichtsystemeinheit als solchem ist es erforderlich, die Sicht auf den Fahrer ausrichten zu können, um die Fahrersicht zu gewährleisten. Neben dem Anhängen unterschiedlicher Maschinen gibt es diverse Situationen im Agrar- und Baumaschinenbereich, die eine Neueinstellung des Sichtsystems erfordern, wie beispielsweise ein Wechsel zwischen einem Straßen- und Feldbetrieb, ein Wenden auf dem Feld und das damit verbundene Vorgewendemanagement, ein Verwenden unterschiedlicher Anbaugeräte mit einem Zugfahrzeug oder ein Verwenden unterschiedlicher Zugfahrzeuge mit einem Anbaugerät.

### Kurzbeschreibung der Figuren

Fign. 1 bis 2 sind schematische Darstellungen eines indirekten Sichtsystems, das an unterschiedlichen Fahrzeugen montiert ist, gemäß einer ersten Ausführungsform,
Fig. 3 ist eine schematische Darstellung des indirekten Sichtsystems, das an einem Fahrzeug montiert ist, gemäß einer zweiten Ausführungsform,
Fign. 4 und 5 sind vergrößerte schematische Darstellungen des Sichtsystems aus Fign. 1 und 2 bzw. aus Fig. 3,
Fig. 6a bis 6c sind schematische Darstellungen der Funktionsweise eines Sichtelement-Verstellelements des Sichtsystems,
Fign. 7a bis 7b sind schematische Darstellungen der Funktionsweise eines Tragstruktur-Verstellelements des Sichtsystems,
Fign. 8a bis 8b zeigen eine konstruktive Ausgestaltung des Sichtsystems,
Fig. 9 ist eine schematische Darstellung eines funktionalen Aufbaus des indirekten Sichtsystems.

Nachstehend werden Ausführungsbeispiele der vorliegenden Offenbarung auf der Basis der zugehörigen Figuren beschrieben.

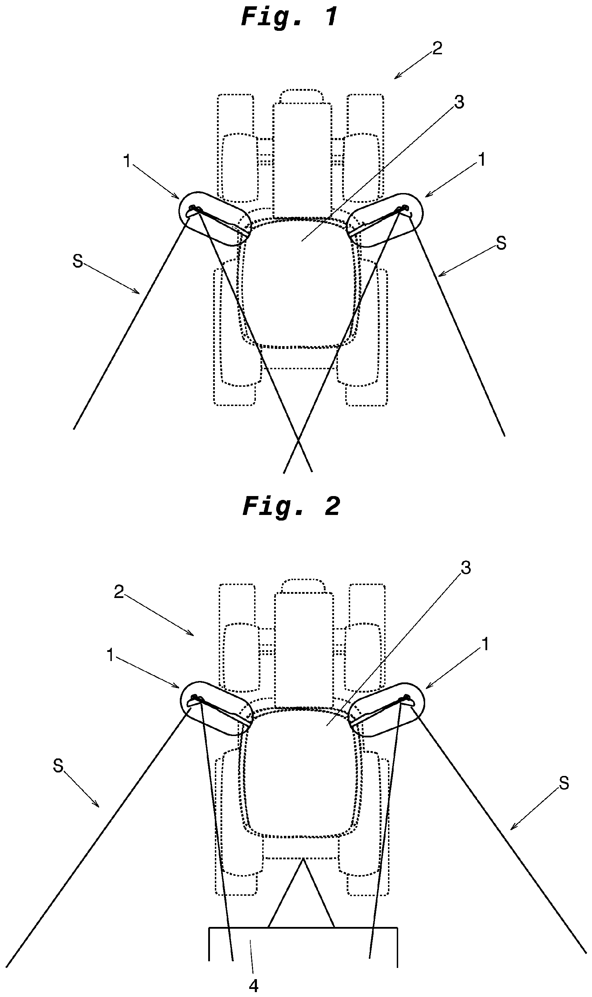

Fig. 1 zeigt ein indirektes Sichtsystem 1, das an einem Fahrzeug 2 montiert ist. Das Sichtsystem 1 kann vollständig außerhalb des Fahrzeugs 2 oder teilweise außerhalb und teilweise innerhalb des Fahrzeugs 2 angeordnet sein. Innerhalb des Fahrzeugs 2 angeordnete Teile des Sichtsystems 1 können beispielsweise eine (in Fig. 1 nicht dargestellte) Anzeigeeinheit, eine Kommunikationsschnittstelle, ein Human-Machine-Interface oder eine Speichereinheit sein.

Das in Fig. 1 dargestellte Fahrzeug 2 (hier in Form einer Baumaschine oder Agrarmaschine) weist (nur) ein Zugfahrzeug 3 bzw. kein Anbaugerät 4 auf. Das Sichtsystem 1 ist so eingestellt, dass ein Interessenbereich (wie hier ein seitlicher, hinterer Fahrzeugteil bzw. Zugfahrzeugteil und vor allem ein Umgebungsbereich neben dem seitlichen, hinteren Fahrzeugteil bzw. Zugfahrzeugteil) in einem Sichtfeld S des Sichtsystems 1 liegt.

Fig. 2 zeigt das indirekte Sichtsystem 1, das an dem Fahrzeug 2 montiert ist. Das Fahrzeug 2 (hier in Form einer Baumaschine oder Agrarmaschine) weist das Zugfahrzeug 3 und ein (durch das Zugfahrzeug 3 gezogenes) Anbaugerät 4 auf. Das Sichtsystem 1 ist so eingestellt, dass ein Interessenbereich (wie hier ein seitlicher, hinterer Fahrzeugteil bzw. Anbaugerätteil und vor allem ein Umgebungsbereich neben dem seitlichen, hinteren Fahrzeugteil bzw. Anbaugerätteil) in dem Sichtfeld S des Sichtsystems 1 liegt. Hierbei ist zu erkennen, dass das Sichtsystem 1 gegenüber Fig. 1 verstellt ist, so dass ein Fahrer an dem Anbaugerät 4 seitlich vorbeischauen kann und nicht (nur) das Anbaugerät 4 - aufgrund seiner geometrischen Abmessungen - selbst einen Großteil des Sichtfelds S einnimmt (was bei einer Einstellung aus Fig. 1 der Fall wäre).

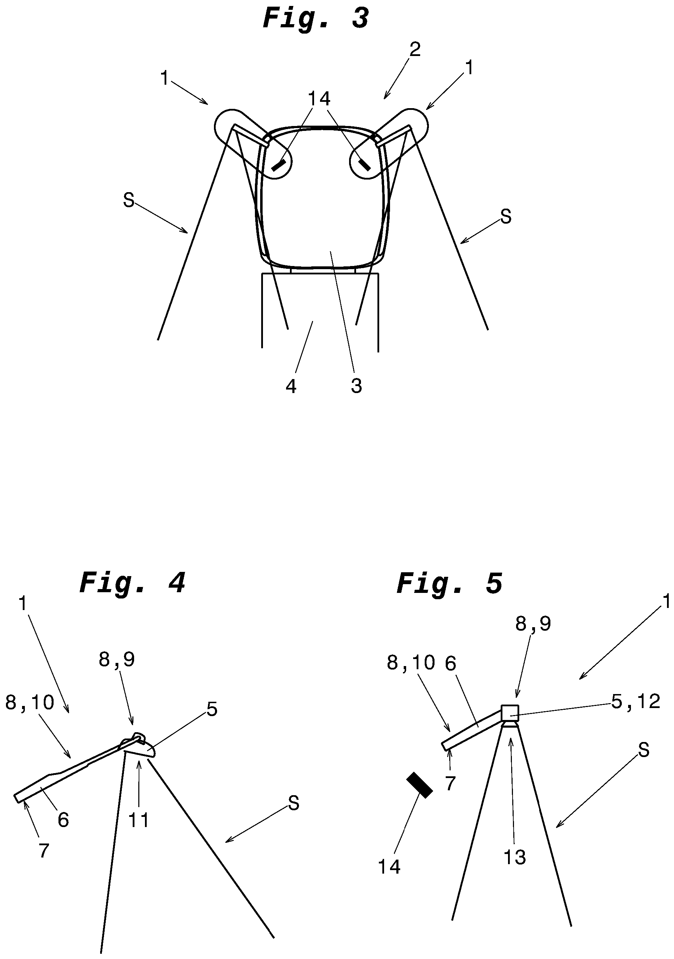

Fig. 3 zeigt das indirekte Sichtsystem 1, das an dem Fahrzeug 2 montiert ist. Das Fahrzeug 2 (hier in Form eines Sattelzugs) weist das Zugfahrzeug 3 und das (durch das Zugfahrzeug 3 gezogenes) Anbaugerät 4 (hier in Form eines Anhängers) auf. Das Sichtsystem 1 ist so eingestellt, dass ein Interessenbereich (wie hier ein seitlicher, hinterer Fahrzeugteil bzw. Anhängerteil und vor allem ein Umgebungsbereich neben dem seitlichen, hinteren Fahrzeugteil bzw. Anbaugerätteil) in dem Sichtfeld S des Sichtsystems 1 liegt. Hierbei ist zu erkennen, dass das Sichtsystem 1 (gegenüber einer (nicht dargestellten) Einstellung des Sichtsystems 1 ohne Anbaugerät 4) so eingestellt ist, dass der Fahrer an dem Anbaugerät 4 seitlich vorbeischauen kann und nicht (nur) das Anbaugerät 4 - aufgrund seiner geometrischen Abmessungen - selbst einen Großteil des Sichtfelds S einnimmt.

Das heißt, dass das Fahrzeug 2 insbesondere als ein Nutzfahrzeug, vorzugsweise als ein Agrarfahrzeug oder eine Baumaschine oder ein Lastkraftwagen ausgebildet ist. Unter dem Anbaugerät 4 sind insbesondere gezogene, d.h. insbesondere nicht selbstständig antreibbare, und auswechselbare Geräte, wie beispielsweise auch Anhänger, zu verstehen. Unter dem Fahrzeug 2, das das Zugfahrzeug 3 und das Anbaugerät 4 aufweist, kann aber auch eine Kombination aus Zugfahrzeug 3 und Anbaugerät 4, wie eine selbstfahrende Arbeitsmaschine, zu verstehen sein. Ein Anbaugerät 4 kann beispielsweise ein Arbeitsgerät, wie ein Pflug, Düngerstreuer, Kreiselegge, Spritze, etc. sein. Eine selbstfahrende Arbeitsmaschine kann beispielsweise ein (Rüben-)Vollernter, Feldhäckslers, etc. sein.

Fign. 4 und 5 zeigen jeweils eine vergrößerte Darstellung des Sichtsystems 1. Das Sichtsystem 1 weist ein Sichtelement 5 und eine Tragstruktur 6 auf. Das Sichtelement 5 ist über die Tragstruktur 6 mit dem Fahrzeug 2 verbunden. Das heißt, dass die Tragstruktur 6 eine Fahrzeuganbindung 7 ausbildet.

Das Sichtsystem 1 weist eine Verstelleinheit 8 auf. Die Verstelleinheit 8 weist ein Sichtelement-Verstellelement 9 zum Verstellen des Sichtelements 5 und/oder ein Tragstruktur-Verstellelement 10 zum Verstellen der Tragstruktur 6 auf. Durch Verstellen der Verstelleinheit 8 kann das Sichtfeld S des Sichtsystems 1 verändert werden.

Das Sichtsystem 1 kann als ein Spiegelsystem ausgebildet sein, wobei das Spiegelsystem ein Spiegelglas 11 als das Sichtelement 5 aufweist (vgl. Fig. 4). Das Spiegelglas 11 liegt im Sichtbereich des Fahrers bzw. ist durch den Fahrer (direkt) einsehbar. Bei einem Spiegelsystem wird das Sichtfeld S des Sichtsystems 1 für den Fahrer als eine Reflexion des Sichtfelds bzw. ein reflektiertes Sichtfeld auf dem Spiegelglas 11 angezeigt. Je nach Fahrer bzw. einer Augenposition/Perspektive des Fahrers unterscheidet sich das reflektierte Sichtfeld.

Das Sichtsystem 1 kann als ein digitales Sichtsystem, wie beispielsweise ein Kamera-Monitor-System, insbesondere ein Spiegelersatzsystem nach UN/ECE R46, ausgebildet sein, wobei das Kamera-Monitor-System eine optische Sensoreinheit 12 mit einem Bildsensor 13 als Sichtelement 5 aufweist (vgl. Fig. 5). Zudem weist das digitale Sichtsystem eine Anzeigeeinheit 14, insbesondere einen Monitor zur Darstellung eines durch die optische Sensoreinheit 12 bzw. dem Bildsensor 13 erfassten Erfassungsbereichs bzw. eines Teilbereichs des Erfassungsbereichs auf. Die Anzeigeeinheit 14 (und nicht die optische Sensoreinheit 12) liegt im Sichtbereich des Fahrers bzw. ist durch den Fahrer (direkt) einsehbar. Die Anzeigeeinheit 14 ist vorzugsweise innerhalb des Fahrzeugs 2 angeordnet. Bei einem digitalen Sichtsystem wird das Sichtfeld S des Sichtsystems 1 für den Fahrer als eine Abbildung des Sichtfelds S bzw. abgebildetes Sichtfeld auf der Anzeigeeinheit 14 angezeigt. Unabhängig von dem Fahrer bzw. einer Augenposition/Perspektive des Fahrers ist das abgebildete Sichtfeld (immer) gleich.

Das Sichtelement-Verstellelement 9 dient insbesondere zu einem physischen Verstellen des Sichtelements 5 (im Fall der Ausbildung als Spiegelsystem) und/oder zu einem digitalen Verstellen des Sichtelements 5 (im Fall der Ausbildung als digitales Sichtsystem). Das Sichtelement-Verstellelement 9 kann eine mechanische bzw. mechatronische Komponente zum Ausführen einer Verstellbewegung, insbesondere einer Drehbewegung bzw. Kippbewegung, in drei Raumrichtungen aufweisen. Das Sichtelement-Verstellelement 9 kann eine digitale Komponente, insbesondere in Form einer Verarbeitungseinheit, zur Änderung einer Skalierung und/oder einer Größe und/oder eines Ausschnitts eines für den Fahrer bzw. auf der Anzeigeeinheit 14 angezeigten/abgebildeten Sichtfelds/Bildbereichs aufweisen. Die Verarbeitungseinheit kann einen Prozessor umfassen.

Bei dem digitalen Verstellen kann entweder ein Teilbereich des Bildsensors 13 oder ein (kompletter) Bereich des Bildsensors 13 als Auslesebereich ausgelesen werden. Die ausgelesenen Bildsensordaten enthalten Rohdaten, die (durch eine Verarbeitungseinheit des Sichtsystems 1) verarbeitet werden und (dann) als verarbeitete Bilddaten vorliegen. Nach dem Auslesen kann ein (bestimmter) Ausschnitt aus den Rohdaten und/oder den verarbeiteten Bilddaten ausgeschnitten und (durch die Anzeigeeinheit 14) angezeigt/abgebildet/dargestellt werden. Das heißt, dass das Ausschneiden an jeder Stelle vor, während oder nach der (Bild-)Verarbeitung erfolgen kann. Insbesondere kann das Ausschneiden vor der (Bild-)Verarbeitung erfolgen, um eine Datenmenge und/oder eine Rechenleistung zu reduzieren. Je nachdem, welcher Teilbereich des Bildsensors 13 ausgelesen und/oder welcher Ausschnitt aus den Rohdaten und/oder den verarbeiteten Bilddaten ausgeschnitten und ggf. skaliert bzw. vergrößert/verkleinert wird, ändert sich das für den Fahrer abgebildete Sichtfeld.

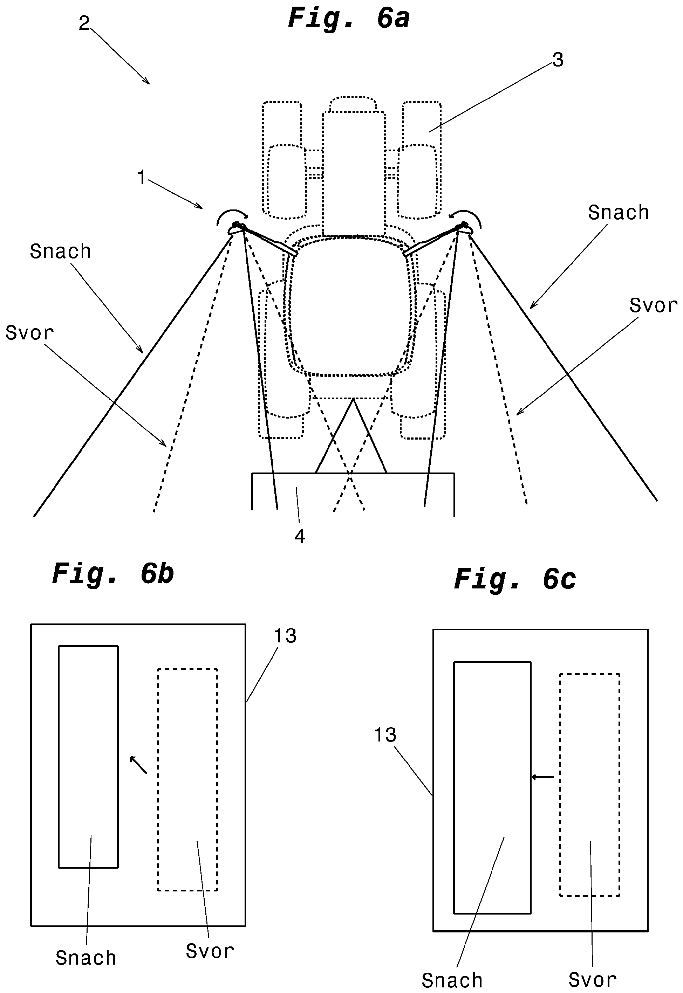

In Fig. 6a ist dargestellt, dass zum Verstellen des Sichtelements 5 das Sichtelement 5 verschwenkt wird, wodurch sich das vor der Verstellung eingestellte Sichtfeld Svor auf ein nach der Verstellung eingestelltes Sichtfeld Snach verändert. Entsprechend ändert sich für den Fahrer die Perspektive (im Fall eines Spiegelsystems) bzw. die Position des Bildsensors (im Fall eines digitalen Sichtsystems) und daher das für den Fahrer zur Verfügung gestellte, d.h. wahrnehmbare/einsehbare, reflektierte bzw. abgebildete Sichtfeld.

In Fig. 6b ist dargestellt, dass zum Verstellen des Sichtelements 5 ein anderer Ausschnitt ausgeschnitten wird, wodurch sich das vor der Verstellung eingestellte Sichtfeld Svor auf ein nach der Verstellung eingestelltes Sichtfeld Snach verändert. Entsprechend ändert sich das für den Fahrer zur Verfügung gestellte, d.h. wahrnehmbare/einsehbare, abgebildete Sichtfeld.

In Fig. 6c ist dargestellt, dass zum Verstellen des Sichtelements 5 zusätzlich eine Größe und/oder Skalierung des Ausschnitts geändert wird, wodurch sich das vor der Verstellung eingestellte Sichtfeld Svor auf ein nach der Verstellung eingestelltes Sichtfeld Snach verändert. Entsprechend ändert sich das für den Fahrer zur Verfügung gestellte, d.h. wahrnehmbare/einsehbare, abgebildete Sichtfeld.

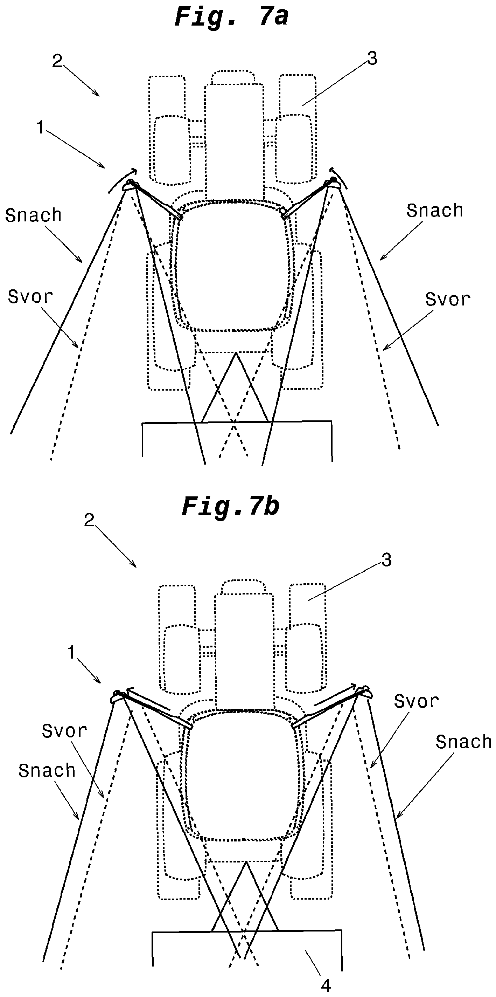

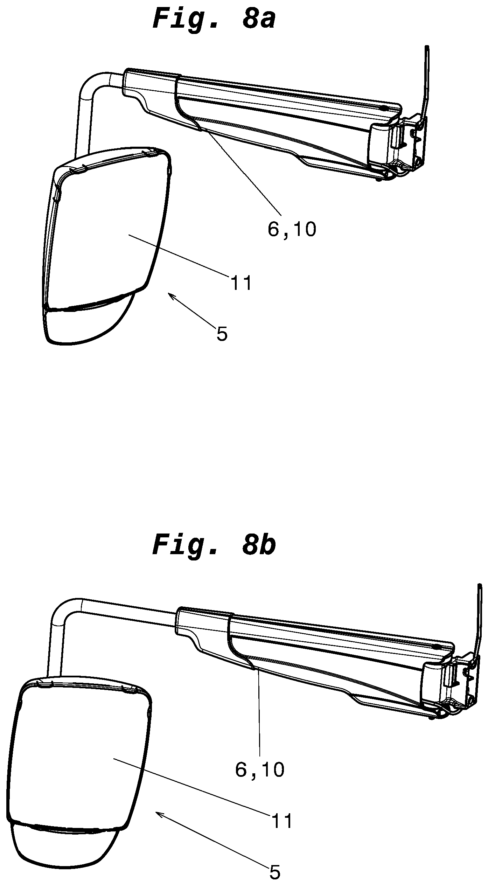

Das Tragstruktur-Verstellelement 10 dient insbesondere zu einem physischen Verstellen der Tragstruktur 6. Das Tragstruktur-Verstellelement 10 kann eine mechanische Komponente zum Ausführen einer linearen Translationsbewegung (vgl. Fig. 7a) und/oder einer Schwenkbewegung aufweisen (vgl. Fig. 7b). Insbesondere kann die mechanische Komponente eine Teleskopstange sein (vgl. Fign. 8a und 8b). Durch das Verstellen des Tragstruktur-Verstellelements 10 ändert sich das vor der Verstellung eingestellte Sichtfeld Svor auf ein nach der Verstellung eingestelltes Sichtfeld Snach. Entsprechend ändert sich für den Fahrer die Perspektive (im Fall eines Spiegelsystems) bzw. die Position des Bildsensors (im Fall eines digitalen Sichtsystems) und daher das für den Fahrer zur Verfügung gestellte, d.h. wahrnehmbare/einsehbare, reflektierte bzw. abgebildete Sichtfeld.

Gemäß der Offenbarung ist das Sichtsystem 1 eingerichtet, die Verstelleinheit 8 in Abhängigkeit von geometrischen Abmessungen 15, insbesondere einer Länge und/oder einer Breite und/oder einer Achsenanzahl, und/oder eines Zustands 16 und/oder einer globalen Position 17, insbesondere GPS-Position, des Anbaugeräts 4 automatisch, insbesondere ohne manuelles Auslösen der Verstellung durch einen Fahrer, zu verstellen.

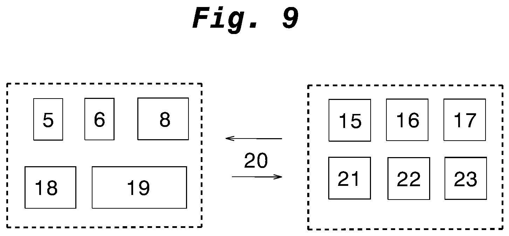

Zudem kann das Sichtsystem 1 eine Speichereinheit 18 zum Speichern von vordefinierten Positionen der Verstelleinheit 8 und eine Kommunikationsschnittstelle 19 zum Senden und/oder zum Empfangen von Fahrzeugsignalen 20, welche Informationen über die geometrischen Abmessungen 15 und/oder den Zustand 16 und/oder der globalen Position 17 des Anbaugeräts 4 enthalten, aufweisen (vgl. Fig. 9). Dabei sind die Fahrzeugsignale 20 jeweils einer vordefinierten Position der Verstelleinheit 8 zugeordnet und das Sichtsystem 1 ist eingerichtet ist, die Verstelleinheit 8 in Abhängigkeit des Fahrzeugsignals 20 auf die dem Fahrzeugsignal 20 zugeordnete, vordefinierte Position der Verstelleinheit 8 zu verstellen.

Zudem kann das Sichtsystem 1 eine Steuereinheit bzw. Verarbeitungseinheit bzw. Logik aufweisen. Die Steuereinheit kann auch in der Kommunikationsschnittstelle 19 integriert sein. Die Steuereinheit kann fahrzeugseitig oder sichtsystemseitig verbaut sein.

Zudem kann das Fahrzeugsignal 20 Informationen zu einer Fahreridentifikation 21 enthalten. Insbesondere können die vordefinierten Positionen der Verstelleinheit 8 in Abhängigkeit der Fahreridentifikation 21 in der Speichereinheit 17 gespeichert sein.

Zudem kann das Fahrzeugsignal 20 Informationen zu einem Fahrzeugtyp 22 des Fahrzeugs 2 enthalten. Insbesondere können die vordefinierten Positionen der Verstelleinheit 8 in Abhängigkeit des Fahrzeugtyps 22 in der Speichereinheit 18 gespeichert sein.

Zudem kann das Fahrzeugsignal 20 Informationen zu einem Anbaugerätetyp 23 des Fahrzeugs 2 enthalten. Insbesondere können die vordefinierten Positionen der Verstelleinheit 8 in Abhängigkeit des Anbaugerätetyp 23 in der Speichereinheit 18 gespeichert sein.

Weiter können die vordefinierten Positionen manuell, insbesondere über ein Human-Machine-Interface, einstellbar und/oder nachjustierbar sein. Ferner kann eine eingestellte Position als eine vordefinierte Position in der Speichereinheit 18 abspeicherbar sein und/oder eine manuell nachjustierte Position einer vordefinierten Position als eine korrigierte vordefinierte Position in der Speichereinheit 18 abspeicherbar sein.

### Bezugszeichenliste

- 1: Indirektes Sichtsystem
- 2: Fahrzeug
- 3: Zugfahrzeug
- 4: Anbaugerät
- 5: Sichtelement
- 6: Tragstruktur
- 7: Fahrzeuganbindung
- 8: Verstelleinheit
- 9: Sichtelement-Verstellelement
- 10: Tragstruktur-Verstellelement
- 11: Spiegelglas
- 12: optische Sensoreinheit
- 13: Bildsensor
- 14: Anzeigeeinheit
- 15: geometrische Abmessungen des Anbaugeräts
- 16: Zustand des Anbaugeräts
- 17: globale Position des Anbaugeräts
- 18: Speichereinheit
- 19: Kommunikationsschnittstelle
- 20: Fahrzeugsignal
- 21: Fahreridentifikation
- 22: Fahrzeugtyp
- 23: Anbaugerätetyp

- S: Sichtfeld
- Svor: vor einer Verstellung eingestelltes Sichtfeld
- Snach: nach einer Verstellung eingestelltes Sichtfeld

## Patentansprüche

1. Indirektes Sichtsystem (1) für ein Fahrzeug (2), das ein Zugfahrzeug (3) und ein Anbaugerät (4) aufweist, insbesondere für ein Nutzfahrzeug, vorzugsweise für ein Agrarfahrzeug oder eine Baumaschine oder für einen Lastkraftwagen, mit
einem Sichtelement (5),
einer Tragstruktur (6), wobei die Tragstruktur (6) eine Fahrzeuganbindung (7) des Sichtsystems (1) ausbildet und das Sichtelement (5) über die Tragstruktur (6) mit der Fahrzeuganbindung (7) verbunden ist,
einer Verstelleinheit (8), wobei die Verstelleinheit (8) ein Sichtelement-Verstellelement (9) zum Verstellen des Sichtelements (5) und/oder ein Tragstruktur-Verstellelement (10) zum Verstellen der Tragstruktur (6) aufweist,
**dadurch gekennzeichnet, dass**
das Sichtsystem (1) eingerichtet ist, die Verstelleinheit (8) in Abhängigkeit von geometrischen Abmessungen (15), insbesondere einer Länge und/oder einer Breite und/oder einer Achsenanzahl, und/oder eines Zustands (16) und/oder einer globalen, insbesondere satellitengestützt bestimmten Position (17) des Anbaugeräts (4) automatisch, insbesondere ohne manuelles Auslösen der Verstellung durch einen Fahrer, zu verstellen.

2. Sichtsystem (1) nach Anspruch 1, **dadurch gekennzeichnet, dass** das Sichtsystem (1) eingerichtet ist, die Verstelleinheit (8) in einem Schritt aus einer aktuellen Position in eine vordefinierte Position und/oder bei Anhängevorgängen zu verstellen.

3. Sichtsystem (1) nach Anspruch 1 oder 2, **dadurch gekennzeichnet, dass** das Sichtsystem eine Speichereinheit (18) zum Speichern von vordefinierten Positionen der Verstelleinheit (8) und eine Kommunikationsschnittstelle (19) zum Senden und/oder zum Empfangen von Fahrzeugsignalen (20), welche Informationen über die geometrischen Abmessungen (15) und/oder den Zustand (16) und/oder der globalen Position (17) des Anbaugeräts (4) enthalten, aufweist,
wobei die Fahrzeugsignale (20) jeweils einer vordefinierten Position der Verstelleinheit (8) zugeordnet sind und das Sichtsystem (1) eingerichtet ist, die Verstelleinheit (8) in Abhängigkeit des Fahrzeugsignals (20) auf die dem Fahrzeugsignal (20) zugeordnete, vordefinierte Position der Verstelleinheit zu verstellen.

4. Sichtsystem (1) nach Anspruch 3, **dadurch gekennzeichnet, dass** das Fahrzeugsignal (20) Informationen zu einer Fahreridentifikation (21) des Fahrzeugs und/oder zu einem Fahrzeugtyp (22) und/oder zu einem Anbaugerätetyp (23) enthält und/oder die vordefinierten Positionen der Verstelleinheit (8) in Abhängigkeit der Fahreridentifikation (21) und/oder des Fahrzeugtyps (22) und/oder des Anbaugerätetyps (23) in der Speichereinheit (18) gespeichert sind.

5. Sichtsystem (1) nach Anspruch 3 oder 4, **dadurch gekennzeichnet, dass** die vordefinierten Positionen manuell, insbesondere über ein Human-Machine-Interface, einstellbar und/oder nachjustierbar sind.

6. Sichtsystem (1) nach Anspruch 5, **dadurch gekennzeichnet, dass** eine eingestellte Position als eine vordefinierte Position in der Speichereinheit (18) abspeicherbar ist und/oder eine manuell nachjustierte Position einer vordefinierten Position als eine korrigierte vordefinierte Position in der Speichereinheit (18) abspeicherbar ist.

7. Sichtsystem (1) nach einem der Ansprüche 1 bis 6, **dadurch gekennzeichnet, dass** das Tragstruktur-Verstellelement (10) eine mechanische und/oder mechatronische Komponente zum Ausführen einer linearen Translationsbewegung und/oder einer Schwenkbewegung aufweist, wobei die mechanische und/oder mechatronische Komponente vorzugsweise eine Teleskopstange ist, und/oder das Sichtelement-Verstellelement (9) eine mechanische und/oder mechatronische Komponente zum Ausführen einer Verstellbewegung in drei Raumrichtungen aufweist.

8. Sichtsystem (1) nach einem der Ansprüche 1 bis 7, **dadurch gekennzeichnet, dass** das Sichtelement-Verstellelement (9) eine digitale Komponente zur Änderung einer Skalierung und/oder einer Größe und/oder eines Ausschnitts eines für den Fahrer angezeigten Bildbereichs aufweist,
wobei das Sichtsystem (1) vorzugsweise ausgebildet ist, um eine durch die digitale Komponente erfolgte Verstellung als ein Overlay für den Fahrer anzuzeigen.

9. Sichtsystem (1) nach einem der Ansprüche 1 bis 8, **dadurch gekennzeichnet, dass** das Sichtsystem (1) ein Spiegelsystem oder ein Kamera-Monitor-System, insbesondere in Spiegelersatzsystem nach UN/ECE R46 ist, wobei das Kamera-Monitor-System eine optische Sensoreinheit (12) als Sichtelement (5) und eine Anzeigeeinheit (14) aufweist.

10. Fahrzeug (2), das ein Zugfahrzeug (3) und ein Anbaugerät (4) aufweist, insbesondere Nutzfahrzeug, vorzugsweise Agrarfahrzeug oder Baumaschine oder Lastkraftwagen, mit einem Sichtsystem (1) nach einem der Ansprüche 1 bis 9.
